# EUROPÄISCHE PATENTANMELDUNG

(11) **EP 1 167 926 A2**
(43) Veröffentlichungstag der Anmeldung: **02.01.2002**
(21) Anmeldenummer: 01112520.0
(22) Anmeldetag: 23.05.2001
(51) Int. Cl.: G01D 5/243

(54) **Antennenanordnung**

(30) Priorität: 23.06.2000 DE 10029681
(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(57) **Zusammenfassung**

Es wird eine Antennenanordnung für ein Lesegerät, Schreib-/-Lesegerät oder einen Transponder zur Daten- und Energieübertragung über den magnetischen Anteil eines elektromagnetischen Feldes beschrieben

Wenigstens zwei Antennenspulen sind vorhanden, deren Achsen unterschiedlich ausgerichtet sind.

## Beschreibung

Die Erfindung betrifft eine Antennenanordnung nach dem Oberbegriff des Anspruchs 1.

Zur berührungslosen Identifikation von Gegenständen, Personen und Tieren dienen Systeme aus wenigstens einem Lesegerät oder Schreib-/Lesegerät und wenigstens einem Transponder. Dazu findet eine Datenübertragung zwischen dem Transponder und dem Lesegerät oder Schreib-/Lesegerät über ein elektromagnetisches Feld statt. Besonders verbreitet sind passive Transpondersysteme, bei denen der Transponder gleichzeitig vom Lesegerät oder Schreib-/Lesegerät mit Energie versorgt wird, so dass keine autarke Energiequelle im Transponder enthalten sein muss. Zur Energie- und Datenübertragung wird der magnetische Anteil eines elektromagnetischen Feldes genutzt und als Antennen Spulen eingesetzt, die die Induktivität eines Schwingkreises darstellen.

Um bei passiven Transpondersystemen eine ausreichende Reichweite zu erzielen, ist eine einheitliche Ausrichtung oder Polarisation der Antennenspulen von Lesegerät oder Schreib-/-Lesegerät und Transponder wichtig. In vielen Anwendungsfällen ist die Ausrichtung durch die zufällige Lage des Transponders gegeben, in der er in das Feld des Lesegerätes oder Schreib-/Lesegerätes gelangt. Dementsprechend ist selten eine einheitliche Ausrichtung der Antennenspulen gegeben. Aber selbst bei einer Zwangsführung von Gegenständen, die mit einem Transponder ausgestattet sind, können bei unterschiedlichen Systemen auch unterschiedliche Ausrichtungen der zu koppelnden Antennenspulen vorhanden sein.

Der Erfindung liegt die Aufgabe zugrunde, eine Antennenanordnung für ein Lesegerät oder Schreib-/Lesegerät oder einen Transponder zu schaffen, die für eine Daten- und Energieübertragung über den magnetischen Anteil eines elektromagnetischen Feldes bei unterschiedlichen Ausrichtungen der zu koppelnden Antennenspulen geeignet ist.

Diese Aufgabe wird bei einer Antennenanordnung nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Bei der erfindungsgemäßen Lösung umfasst die Antennenanordnung des Lesegerätes oder Schreib-/Lesegerätes oder des Transponders wenigstens zwei Antennenspulen, deren Achsen unterschiedlich ausgerichtet sind. Durch Überlagerung der Felder der wenigstens zwei Antennespulen lässt sich eine mehrdimensionale Ausrichtung der magnetischen Felder dieser Antennenanordnung erzielen und so mit hoher Wahrscheinlichkeit eine Richtungskomponente erzeugen, die mit der Ausrichtung der Antennenspule der Gegenstelle übereinstimmt. Die Gegenstelle kommt dann mit nur einer Antennenspule aus.

Eine Weiterbildung sieht vor, dass wenigstens drei Antennenspulen vorhanden sind, deren Achsen Richtungskomponenten aller drei Achsen eines kartesischen Koordinatensystems besitzen.

Bei dieser Lösung ist die Wahrscheinlichkeit, eine Richtungskomponente zu erzeugen, die mit der Ausrichtung der Antennenspule der Gegenstelle übereinstimmt, 100%. Hier ist also in jedem Fall eine Kopplung der Antennenspulen möglich.

Vorzugsweise schließen die Achsen der Antennenspulen einen gegenseitigen Winkel von 90 Grad ein.

Bei dieser Anordnung entsprechen die Achsen der Antennenspulen den Koordinaten eines kartesischen Koordinatensystems. Dies ermöglicht bei einer geringen Anzahl von Antennenspulen alle Feldrichtungen in der Ebene oder im Raum durch Überlagerung der magnetischen Felder zu erzeugen. Bei Überlagerung der magnetischen Felder können die Feldkomponenten der einzelnen Antennenspulen stets kleiner sein als bei ausschließlich einer Feldkomponente in Richtung einer der Koordinatenachse.

Gemäß einer Weiterbildung können die Antennenspulen im Wechsel betrieben werden.

Es ist dann möglich, diejenige Antennenspule auszuwählen, die die größte Feldkomponente liefert.

Alternativ können die Antennenspulen gemeinsam betrieben werden.

Dadurch lassen sich aus den einzelnen Feldkomponenten unterschiedlicher Antennenspulen dann resultierende Feldrichtungen erzeugen, die mit der Ausrichtung der Antennenspule der Gegenstelle weitgehend oder sogar genau in Übereinstimmung zu bringen sind.

Eine Weiterbildung sieht vor, dass die Antennenspulen mit unterschiedlicher Phasenlage betrieben werden.

Auf diese Weise ist es möglich, Raumfelder oder Felder mit resultierenden Feldrichtungen in beliebigen Raumwinkeln aus unterschiedlichen Feldkomponenten der einzelnen Antennenspulen zu erzeugen.

So kann die Phasenlage unter Berücksichtigung der gegenseitig Ausrichtung der Achsen der Antennenspulen so gewählt ist, dass eine gegenseitige Überlagerung der Felder minimiert ist.

Diese Fall ist z. B. bei einer Ausrichtung der Achsen der Antennenspulen in einem gegenseitigen Winkel von 90 Grad und einer Phasenverschiebung von 120 Grad gegeben. Die einzelnen Felder der Antennenspulen können sich dann ohne Beeinflussung durch die anderen Antennenspulen ausrichten und ausbreiten, als wäre jede Antennenspule nur einzeln einschaltet. Bei Abweichung der Ausrichtung der Achsen der Antennenspulen von einem gegenseitigen Winkel von 90 Grad muss die Phasenverschiebung von 120 Grad abweichen, damit der gleiche Effekt erzielt wird.

Außerdem kann die Phasenlage unter Berücksichtigung der gegenseitig Ausrichtung der Achsen der Antennenspulen so gewählt ist, dass die Komponenten der Felder einen wählbaren resultierenden Raumvektor bilden.

Hierdurch kann eine genaue Übereinstimmung der Feldrichtung mit der Feldrichtung der Gegenstelle hergestellt werden. Sinngemäß kann eine Antennenspule simuliert werden, deren Achse sich in der Fläche oder im Raum genau mit der Achse der Antennenspule der Gegenstelle in Übereinstimmung bringen lässt.

Es ist auch möglich, dass die Phasenlage dynamisch veränderbar ist.

Hierdurch kann man den Raumvektor rotieren lassen und so z. B. bei unbekannter Lage der Achse der Antennenspule der Gegenstelle, eine optimale Position empirisch ermitteln.

Eine erste Ausgestaltung der Erfindung sieht vor, dass alle Antennenspulen Luftspulen sind.

Bei dieser Ausführung ist eine weitgehende Unabhängigkeit der Induktivität von klimatischen Einflüssen gegeben.

Eine zweite Ausgestaltung der Erfindung sieht vor, dass alle Antennenspulen Ferritspulen sind.

Durch Ferritkerne lassen sich die Feldlinien bündeln, so dass kleinere Bauformen der Antennenspulen im Vergleich zu Luftspulen möglich sind.

Eine dritte Ausgestaltung der Erfindung sieht vor, dass als Antennenspulen sowohl Luftspulen als auch Ferritspulen vorhanden sind.

Diese Kombination erlaubt besonders flache Bauformen, wenn die Achse der Luftspule und der Ferritspule senkrecht aufeinander stehen.

Die Antennenspulen können auch an unterschiedlichen Orten platziert sein.

Werden Transponder mit unterschiedlicher Ausrichtung der Antennenspulen eingesetzt und haben diese etwa den gleichen Abstand zu den Antennenspulen an den unterschiedlichen Orten, so findet eine Übertragung zu derjenigen Antennenspule statt, die die beste Übereinstimmung mit der Ausrichtung der Antennenspule der Gegenstelle ergibt.

Es ist ferner möglich, die Antennenspulen benachbart in einem gemeinsamen Gehäuse anzuordnen. Hierdurch lässt sich ein einziges Gehäuse für mehrere Antennenspulen benutzen und die Antennenspulen lassen sich auf sehr kleinem Raum verpacken.

Bei einer Kombination einer Luftspule, die eine in einer Ebene ausgeführte Wicklung aufweist, mit einer Ferritspule und senkrechter Ausrichtung der Achsen von Luftspule und Ferritspule kann die Wicklung der Luftspule in einer Ebene ausgeführt sein und die Achse der Ferritspule in der Wicklungsebene der Luftspule liegen.

Dies schafft die Voraussetzung dafür, beide Antennen räumlich sehr nahe beieinander anzuordnen. Dadurch ist nicht nur eine benachbarte Anordnung beider Antennen in einem Gehäuse möglich, sondern auch eine enge Kopplung mit der jeweils gegenüberliegenden Antennenspule der Gegenstelle.

Die Achse der Ferritspule kann in der Wicklungsebene außerdem innerhalb der Luftspule liegen.

Dies steigert die angestrebte engen Kopplung mit der jeweils gegenüberliegenden Antenne. Außerdem wird durch die Ausnutzung des vorhandenen Innenbereichs der Luftspule eine besonders kompakte Bauform mit dem Vorteil einer engen Kopplung mit der jeweils gegenüberliegenden Antennenspule realisiert.

Weiterhin können die längere Seite der Luftspule und die Achse der Ferritspule parallel liegen.

Dies ermöglicht eine optimale Integration der beiden Antennen bei gleichzeitiger Erzielung einer besonders raumsparenden Anordnung, wenn die längere Seite der Luftspule und die Achse der Ferritspule parallel liegen.

Die Luftspule und die Ferritspule können in Serie geschaltet sein. In diesem Fall sind nur zwei Anschlüsse für beide Antennen nach außen nötig. Indem stets beide Antennen genutzt werden, können alle Polarisationsrichtungen der Antennenspulen erfasst werden, ohne dass die genaue Kenntnis der verwendeten Polarisationsrichtung nötig ist.

Alternativ können die Luftspule und die Ferritspule einen gemeinsamen nach außen geführten Anschluss aufweisen. In diesem Fall ist neben einer gemeinsamen Anschaltung auch eine selektive oder kombinierte Anschaltung der Antennen möglich, um die Energie jeweils auf die zutreffende Polarisationsrichtung oder eine resultierende Richtung zu konzentrieren.

Nachfolgend wird die Erfindung anhand eines Ausführungsbeispiels näher erläutert, das in der Zeichnung dargestellt ist. In der Zeichnung zeigen:

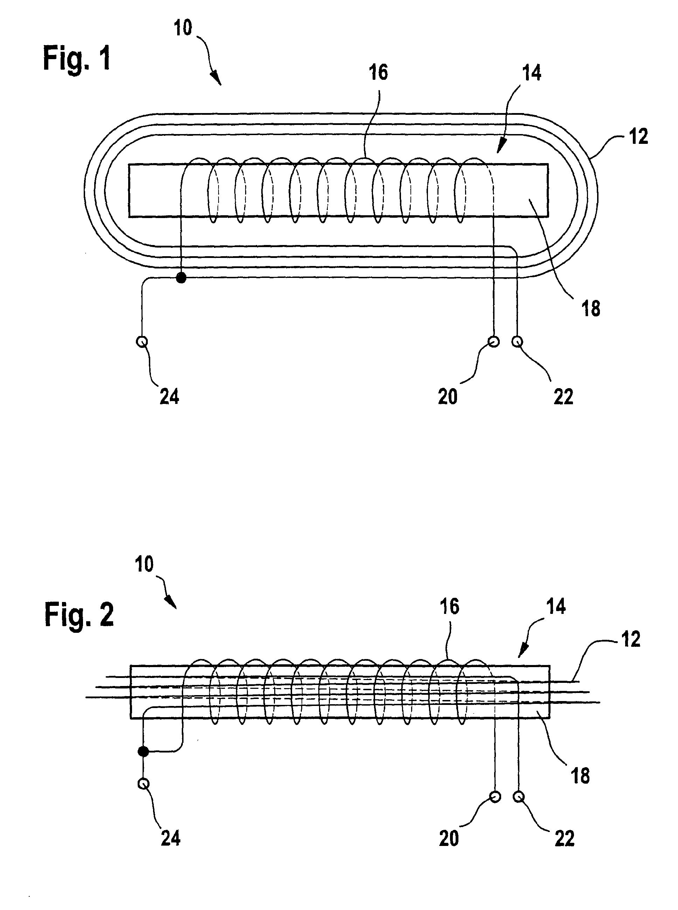

- Fig. 1: eine Draufsicht auf eine Antennenanordnung nach der Erfindung und
- Fig. 2: eine Seitenansicht der Antennenanordnung nach der Erfindung.

Als Anwendungsbeispiel dient eine Antennenanordnung für ein Lesegerät, das in der Kammleiste der Schüttung eines Müllsammelfahrzeugs angeordnet ist. Das Lesegerät kommuniziert mit Transpondern, die in einer Aussparung eines umlaufenden Kragens eines Müllgefäßes angeordnet sind. Der Transponder speichert im einfachsten Falle eine Identnummer, die mittels des Lesegerätes gelesen werden kann, um den aufgenommenen Müll beispielsweise für Abrechnungszwecke einem bestimmten Kunden zuordnen zu können.

Es sei davon ausgegangen, dass in der Aussparung des Kragens des Müllgefäßes Transponder unterschiedlicher Systeme angeordnet sein können, die mit demselben Lesegerät des Müllsammelfahrzeugs erfasst werden sollen. Dabei gibt es einmal Transponder mit einer waagerecht liegenden Ferritspule, deren Achse in Längsrichtung zu der Seite weist, die von der Kammleiste aufgenommen wird. Außerdem gibt es Systeme mit einer Luftspule, deren Achse senkrecht ausgerichtet ist und deren Wicklung waagerecht liegt. Die Feldlinien weisen in Richtung der Achsen der Spulen und unterscheiden sich in der Ausrichtungen um 90 Grad.

Um mit einer Antennenanordnung des Lesegerätes eine Daten-und Energieübertragung sowohl mit dem einen als auch dem anderen Transponder zu ermöglichen, besteht die Antennenanordnung in der Kammleiste aus einer Luftspule, die bei entsprechender Stellung der Schüttung mit ihrer Achse senkrecht liegt und einer Ferritspule, die mit ihrer Achse waagerecht und quer zur Fahrtrichtung des Müllsammelfahrzeugs ausgerichtet ist. Die Antennenspulen der Antennenanordnung des Lesegerätes entsprechen in ihrer Ausrichtung jeweils der Ausrichtung der Antennenspulen der Transponder der beiden Transpondersysteme bei Annäherung von Transponder und Lesegerät an einander.

Die in der Zeichnung dargestellte Antennenanordnung 10 besteht im einzelnen aus einer Luftspule 12, die eine ovale Form aufweist und deren Wicklung in einer Ebene senkrecht zur Achse der Luftspule 12 liegt. Im Innenraum der Luftspule 12 ist eine Ferritspule 14 aus einer Wicklung 16 und einem Ferritstab 18 angeordnet, wobei die Wicklung 16 um den zylindrischen Ferritstab 18 herumgewickelt ist. Die Ferritspule 14 liegt in der Ebene der Wicklung der Luftspule 12 und nimmt den länglichen Innenraum dieser Luftspule 12 ein. Dadurch ergibt sich eine sehr kompakte Bauform, wobei gleichzeitig erreicht wird, dass sowohl die Luftspule 10 als auch die Ferritspule 14 sehr eng mit der entsprechenden Spule des Transponders bei Aufnahme eines Müllgefäßes gekoppelt werden.

Im Ausführungsbeispiel sind die Wicklungen der Luftspule 12 und der Ferritspule 14 miteinander verbunden, weisen aber neben den äußeren Anschlüssen 20 und 22 einen gemeinsamen Anschluss 24 auf, der nach außen geführt ist. Damit ist sowohl ein serieller Betrieb beider Antennenspulen als auch ein Parallelbetrieb möglich. In einem Parallelbetrieb können die Antennenspulen wechselweise oder gemeinsam betrieben werden. Bei einem gemeinsamen Betrieb ist eine Ansteuerung mit unterschiedlichen Phasen möglich, wodurch sich eine variable Richtung der Feldlinien ergibt, die von der Kombination der Antennenspulen erzeugt werden kann.

## Patentansprüche

1. Antennenanordnung für ein Lesegerät, Schreib-/Lesegerät oder einen Transponder zur Daten- und Energieübertragung über den magnetischen Anteil eines elektromagnetischen Feldes, **dadurch gekennzeichnet, dass** wenigstens zwei Antennenspulen (12, 14) vorhanden sind, deren Achsen unterschiedlich ausgerichtet sind.

2. Antennenanordnung nach Anspruch 1, **dadurch gekennzeichnet, dass** wenigstens drei Antennenspulen vorhanden sind, deren Achsen Richtungskomponenten aller drei Achsen eines kartesischen Koordinatensystems besitzen.

3. Antennenanordnung nach Anspruch 1 oder 2, **dadurch gekennzeichnet, dass** die Achsen der Antennenspulen (12, 14) einen gegenseitigen Winkel von 90 Grad einschließen.

4. Antennenanordnung nach einem der Ansprüche 1 bis 3, **dadurch gekennzeichnet, dass** die Antennenspulen im Wechsel betrieben werden.

5. Antennenanordnung nach einem der Ansprüche 1 bis 3, **dadurch gekennzeichnet, dass** die Antennenspulen gemeinsam betrieben werden.

6. Antennenanordnung nach Anspruch 4 oder 5, **dadurch gekennzeichnet, dass** die Antennenspulen mit unterschiedlicher Phasenlage betrieben werden.

7. Antennenanordnung nach Anspruch 4 oder 5, **dadurch gekennzeichnet, dass** die Phasenlage unter Berücksichtigung der gegenseitig Ausrichtung der Achsen der Antennenspulen so gewählt ist, dass eine gegenseitige Überlagerung der Felder minimiert ist.

8. Antennenanordnung nach Anspruch 4 oder 5, **dadurch gekennzeichnet, dass** die Phasenlage unter Berücksichtigung der gegenseitig Ausrichtung der Achsen der Antennenspulen so gewählt ist, dass die Komponenten der Felder einen wählbaren resultierenden Raumvektor bilden.

9. Antennenanordnung nach Anspruch 8, **dadurch gekennzeichnet, dass** die Phasenlage dynamisch veränderbar ist.

10. Antennenanordnung nach einem der Ansprüche 1 bis 9, **dadurch gekennzeichnet, dass** alle Antennenspulen Luftspulen sind.

11. Antennenanordnung nach einem der Ansprüche 1 bis 9, **dadurch gekennzeichnet, dass** alle Antennenspulen Ferritspulen sind.

12. Antennenanordnung nach einem der Ansprüche 1 bis 9, **dadurch gekennzeichnet, dass** als Antennenspulen sowohl Luftspulen (12) als auch Ferritspulen (14) vorhanden sind.

13. Antennenanordnung nach einem der Ansprüche 1 bis 12, **dadurch gekennzeichnet, dass** die Antennenspulen an unterschiedlichen Orten platziert sind.

14. Antennenanordnung nach einem der Ansprüche 1 bis 12, **dadurch gekennzeichnet, dass** die Antennenspulen benachbart in einem gemeinsamen Gehäuse sind.

15. Antennenanordnung nach Anspruch 12 oder 14, **dadurch gekennzeichnet, dass** die Wicklung der Luftspule (12) in einer senkrecht zur Achse der Luftspule liegenden Ebene ausgeführt ist und die Achse einer Ferritspule (14) in der Wicklungsebene der Luftspule liegt.

16. Antennenanordnung nach Anspruch 15, **dadurch gekennzeichnet, dass** die Ferritspule (14) innerhalb der Luftspule (12) liegt.

17. Antennenanordnung nach Anspruch 16, **dadurch gekennzeichnet, dass** die Luftspule (12) eine ovale oder rechteckige Querschnittform aufweist und die längere Seite der Luftspule (12) und die Achse der Ferritspule (14) parallel liegen.
